# EUROPÄISCHE PATENTSCHRIFT

(11) **EP 3 100 910 B1**
(45) Veröffentlichungstag und Bekanntmachung des Hinweises auf die Patenterteilung: **07.10.2020**
(21) Anmeldenummer: 16178929.2
(22) Anmeldetag: 08.04.2014
(51) Int. Cl.: B60Q 1/26, B60Q 1/32, F21S 45/00, B60Q 1/00, B60J 10/00, B60R 13/04, B60R 13/06, B60J 10/75, F21V 7/22, B60J 10/265

(54) **BELEUCHTETE ZIERLEISTE**
ILLUMINATED DECORATIVE STRIP
ENJOLIVEUR ECLAIRE

(43) Veröffentlichungstag der Anmeldung: 07.12.2016
(62) Teilanmeldung aus: 14163945.0
(73) Patentinhaber: DURA Automotive Holdings U.K., Ltd., Birmingham, B35 7AG (GB)
(72) Erfinder: STEGEMANN, Jan, 58809 Neuenrade (DE); HUNDT, Torsten, 58809 Neuenrade (DE); RÖHNER, Stephan, 44287 Dortmund (DE)
(74) Vertreter: btb IP Bungartz Baltzer Partnerschaft mbB Patentanwälte

(56) Entgegenhaltungen:
- EP-A2- 2 298 607
- EP-A2- 2 556 996
- DE-A1-102006 049 872
- DE-A1-102011 106 318
- DE-U1-202013 008 321
- JP-A- 2009 083 565
- US-A1- 2014 049 977

## Beschreibung

Die Erfindung betrifft die Kombination einer beleuchteten Zierleiste für ein Kraftfahrzeug, insbesondere eine Zierleiste als Abdeckleiste einer Dichtleiste für den Fensterschacht einer Fahrzeugtür, mit einem Dichtungsprofil. Die Erfindung betrifft weiterhin ein Kraftfahrzeug mit einer solchen Zierleisten-Dichtungsprofil-Kombination, wobei die Zierleiste zumindest ein Leuchtmittel sowie eine Profilleiste aufweist, die bei bestimmungsgemäßer Endmontage am Fahrzeug eine vom Fahrzeug weg gerichtete Zierseite mit einer äußerlich sichtbaren Zierfläche der Profilleiste und einer zum Fahrzeug hin gerichteten äußerlich nicht sichtbaren Funktionsseite definiert. Die Zierseite weist eine äußerlich sichtbare Zierfläche auf, die durch eine untere Sichtkante begrenzt ist. Die Profilleiste wird dabei von einem am Kraftfahrzeug anzuordnenden Dichtungsprofil getragen, wobei das wenigstens eine Leuchtmittel nach bestimmungsgemäßer Endmontage auf Seiten der Funktionsseite angeordnet ist.

Es ist bekannt, Zierleisten für Kraftfahrzeuge mit Leuchtmitteln zu versehen, um das Fahrzeug optisch aufzuwerten.

Die Offenlegungsschrift DE 10 2008 027 128 A1 offenbart eine Abdeck- bzw. Dichtleiste für ein Kraftfahrzeug mit einer Profilleiste, in die eine LED zur Beleuchtung eines auf der Außenfläche angeordneten Verkleidungselements bzw. einer auf der Außenfläche vorgesehenen Abdeckschicht eingebettet ist. Die Konstruktion ist allerdings verhältnismäßig komplex und aufwendig in der Herstellung und ermöglicht ferner wegen der nur an diskreten Positionen vorgesehenen LEDs keine durchgängig gleichförmige Beleuchtung über die gesamte Leistenlänge hinweg. Außerdem wird es als Nachteil angesehen, dass die Abdeck- bzw. Dichtleiste sich aufgrund ihres äußeren Aufbaus von außen als beleuchtete Leiste identifizieren lässt.

Die DE 10 2006 049 872 A1 offenbart eine Zierleiste mit einem als separates Bauteil in die Zierleiste eingelassenen Beleuchtungsmodul. Das Beleuchtungsmodul erlaubt nur einen eingeschränkten Beleuchtungsbereich und der Aufbau der Zierleiste ist durch die Notwendigkeit der Einbringung eines Ausschnitts in die Zierleiste komplex. Hinzu kommt auch hier, dass diese Art des Aufbaus einer Zierleiste die optische Wertigkeit schmälert, weil die sichtbare Zierleistenoberfläche durchbrochen ist.

Eine ebenfalls mehrteilige, komplex aufgebaute Zierleiste mit integrierten Leuchtmitteln offenbart auch die Druckschrift EP 2 063 057 A1.

Die EP 1 772 667 A2 offenbart ein Kunststoffbauteil mit integrierter Lichtquelle. Hierbei sind die Leuchtelemente zumindest teilweise in die Kunststoff-Formmasse eines Sichtteils eingebettet, was die Herstellung des Kunststoffbauteils beträchtlich verkompliziert. Außerdem ist die Zierleiste aus Kunststoffen zu fertigen, die durchleuchtet werden können, die allerdings gegenüber anderen Materialien einen weniger wertigen Eindruck vermitteln können.

Letztgenannter Nachteil der eingeschränkten Materialauswahl trifft auch auf die in den Druckschriften EP 2 556 996 A2 und EP 2 363 324 A1 offenbarten beleuchteten Zierleisten zu.

Eine Leiste mit einem durchleuchteten, transparenten Leistenteil offenbart auch die US 2003/0002294 A1. Um das Leuchtmittel von außen nicht sichtbar in Erscheinung treten zu lassen, strahlt es seitlich in das transparente Leistenteil ein und ist durch eine zusätzliche, von außen erkennbare Abdeckung verdeckt. Dieser Aufbau ist verhältnismäßig aufwendig, erfordert zusätzliche Bauteile und erlaubt keine sehr flach und schmal bauenden Leisten. Einen insgesamt vergleichbaren und daher auch ähnlich nachteilhaften Aufbau beschreibt die Schrift DE 201 10 352 U1.

Die deutsche Gebrauchsmusterschrift DE 20 2013 008 321 U1 offenbart eine Abdeckungseinrichtung zur Abdeckung einer in einem Karosseriebauteil vorgesehenen Vertiefung, wobei die Abdeckungseinrichtung von einem Leuchtmittel hinterleuchtet ist und Lichtstrahlen durch in der Abdeckungseinrichtung vorgesehene Öffnungen oder durch einen zwischen Fahrzeugkarosserie und Abdeckungseinrichtung vorgesehenen Spalt hindurchtreten. Für den Einsatz einer derartigen Abdeckungseinrichtung ist eine Vertiefung in der Karosserie erforderlich, so dass die Einsatzmöglichkeiten auf wenige Bereiche am Fahrzeug beschränkt sind, die zudem für attraktive Leuchteffekte wenig geeignet sind.

Weitere beleuchtete Zierleisten oder Leistenbauteile sind in den Schriften EP 2 298 607 A2, US 2014/0049977 A1, JP 2009-83565 A und DE 10 2011 106 318 A1 offenbart.

Es ist daher Aufgabe der Erfindung, eine Zierleiste der eingangs genannten Art sowie ein Kraftfahrzeug mit einer Zierleiste zur Verfügung zu stellen, die konstruktiv einfach aufgebaut und kostengünstig herzustellen ist. Sie sollte zudem flach aufbauen und Platz sparend montierbar sein, aber dennoch einen gegenüber den bekannten mit Leuchtmitteln versehenen Zierleisten optisch höherwertigen Eindruck vermitteln können und sich äußerlich von nicht beleuchteten Zierleisten möglichst wenig bis gar nicht unterscheiden. Ferner sollte die Zierleiste den Einsatz von nicht-transparenten Materialien ermöglichen.

Diese Aufgabe wird nach der Erfindung dadurch gelöst, dass die die Profilleiste aus einem nicht lichtdurchlässigen Material hergestellt ist und bei bestimmungsgemäßer Endmontage am Fahrzeug unter der unteren Sichtkante und der angrenzenden Fahrzeugaußenfläche ein Lichtspalt gebildet ist, aus dem das von dem Leuchtmittel emittierte Licht nach außen sichtbar hervorzutreten vermag.

Insbesondere kann vorgesehen sein, dass die Zierleiste derart ausgebildet ist, dass bei bestimmungsgemäßer Endmontage am Fahrzeug zwischen Profilleiste und benachbarter Fahrzeugaußenfläche ein Lichtspalt ausgebildet ist, durch den das von dem Leuchtmittel emittierte Licht nach außen sichtbar hervorzutreten vermag.

Mit dieser Ausgestaltung wird ein Einbetten von Leuchtmitteln in die Profilleiste überflüssig und die Notwendigkeit der Verwendung von durchleuchtbaren (transparenten oder transluzenten) Materialien entfällt. Vielmehr können auch hochwertige, nicht durchleuchtbare Metallleisten Verwendung finden, die auf der Funktionsseite der Profilleiste befindliche Baugruppenkomponenten, insbesondere das Leuchtmittel oder eine Verkabelung, effektiv optisch kaschieren. Ein Lichtleiter, eine LED oder ein sonstiges, die Materialhomogenität der Profilleiste aufhebendes Bauteil ist nicht erforderlich. Die Profilleiste wird auch nicht in einer von außen sichtbaren Weise von einem Bauteil durchdrungen.

Die Lichtstrahlen werden an der der Zierseite abgewandten Seite der Profilleiste (auf der Funktionsseite) erzeugt, hinterleuchten die Profilleiste und treten von hinten durch den zwischen der angrenzenden Fahrzeugaußenfläche und der Zierleiste bestehenden Spalt nach außen aus. Hiermit wird eine indirekte Beleuchtung durch die Zierleiste erzeugt, die sich bei entsprechender Anordnung der Leuchtmittel gleichmäßig über die Länge der Zierleiste erstrecken kann. Im endmontierten Zustand ist die Zierleiste äußerlich von anderen, nicht hinterleuchteten Zierleisten nicht zu unterscheiden. Lediglich eine kleine Schattenfuge, die bei eingeschalteten Leuchtmittel als Lichtspalt dient, kann zu erkennen sein, deren Breite bei geschickter Dimensionierung aber derart geringgehalten werden kann, dass sie optisch nicht ins Gewicht fällt.

Die Fahrzeugaußenfläche ist die an die im Bereich des Lichtspalts an die Zierleiste angrenzende äußere Oberfläche des Fahrzeugs, die den Lichtspalt zusammen mit der Zierleiste begrenzt. Dies kann insbesondere die Lackierte Oberfläche der zur Profilleiste benachbarten Karosserieaußenhaut sein, also insbesondere das lackierte Karosserie blech. Sofern andere Teile - etwa ein Dichtungsprofil, auf das die Profilleiste aufgesetzt ist - zwischen Zierleiste und Karosserieblech hineinragen, kann die Fahrzeugaußenfläche auch von der Oberfläche dieser Teile gebildet sein.

Das Leuchtmittel ist auf der der Zierseite abgewandten Seite der Profilleiste angeordnet (auf der Funktionsseite), befindet sich jedoch außerhalb des von der Profilleiste bestimmten Profilleistenquerschnitts, ist also insbesondere nicht in den Profilleistenquerschnitt eingebettet. Es kann vorgesehen sein, dass das Leuchtmittel auf der Funktionsseite der Profilleiste an der äußeren Oberfläche der Profilleiste angeordnet ist. Alternativ kann aber auch vorgesehen sein, dass die am Kraftfahrzeug angeordnete Dichtung das Leuchtmittel trägt oder dieses an der Kraftfahrzeugaußenfläche auf Seiten der Funktionsseite der Zierleiste angebracht ist.

Bevorzugt wird das Leuchtmittel von einer Leuchtfolie, insbesondere einer OLED Folie (organische Leuchtdiode) gebildet, wobei als unter den Begriff OLED fallend auch eine PHOLED (phosphoreszierende OLED) angesehen wird. Eine OLED bietet sich an, weil diese extrem flach aufbaut, nur einen sehr geringen Bauraum erfordert und auf nahezu jedes Material gedruckt oder geklebt werden kann. In ihrer Herstellung bieten OLEDs gegenüber der LCD-Technologie eine signifikante Kostenersparnis, insbesondere weil sich die OLEDs Leicht verarbeiten lassen und einfach anzusteuern sind. Im Vergleich zu LEDs entwickeln OLEDs weniger Wärme und besitzen einen größeren Temperaturbereich. Auch die für OLEDs erforderliche niedrige Betriebsspannung ist von Vorteil. Die Verwendung von OLEDs stellt darüber hinaus sicher, dass die Zierleiste im beleuchteten Zustand keine durch die Beleuchtung verursachte kritische Erwärmung erfährt. Die Anwendung ist allerdings nicht notwendiger Weise auf OLEDs als Leuchtmittel beschränkt. Insbesondere kommen als weitere Leuchtmittel auch andere folienartige Leuchtmittel in Betracht, beispielsweise eine Elektroluminiszenz-Folie (LM-Folie). Das Leuchtmittel kann insbesondere als ein sich entlang der Zierleiste erstreckender Leuchtstreifen ausgebildet sein. Die Dicke einer derartigen Leuchtfolie bzw. eines derartigen Leuchtfolienstreifens beträgt weniger als ein Millimeter, insbesondere etwa 0,2 mm bis 0,3 mm.

Die Profilleiste besteht bevorzugt aus einem einzigen, homogenen Werkstoff. Als Werkstoff kommen neben üblicherweise für Zierleisten verwendeten Metallen wie Aluminium oder (Edel-)Stahl insbesondere thermoplastische Kunststoffe in Betracht, beispielsweise PMMA, SAN, PC oder ABS.

Der Profilleistenquerschnitt weist in einer vorteilhaften Ausgestaltung einen Hauptschenkel auf, dessen nach außen gerichtete Oberfläche die äußerlich sichtbare Zierfläche bildet. Von diesem Hauptschenkel gehen bevorzugt ein oder mehrere Funktionsschenkel ab, mit der die Profilleiste mit einem diese tragenden Dichtungsprofil zusammenwirkt. Insbesondere kann vorgesehen sein, dass die Funktionsschenkel in das Dichtungsprofil eingreifen, um an diesem gehalten zu werden.

Das Leuchtmittel ist bevorzugt an dem bei bestimmungsgemäßem Einbau untersten Funktionsschenkel angeordnet, der sich in einer vorteilhaften Ausgestaltung nach bestimmungsgemäßer Endmontage am Fahrzeug von einem die untere Sichtkante des Hauptschenkels ausbildenden, einen spitzen Winkel einschließenden Knick im Materialverlauf ausgehend einwärts gerichtet zur Dichtung hin erstreckt. Die zur Fahrzeugaußenfläche gerichtete Oberfläche dieses auf der Funktionsseite der Profilleiste befindlichen Funktionsschenkels trägt in einer bevorzugten Ausgestaltung das Leuchtmittel. Es kann aber auch vorgesehen sein, dass das Leuchtmittel auf der Rückseite des Hauptschenkels angeordnet ist. In beiden Fällen kann der Lichtspalt durch den Abstand, den die unterste Sichtkante des die Zierfläche bildenden Hauptschenkels zur angrenzenden Fahrzeugaußenfläche aufweist, den Lichtspalt definieren.

Um die Breite des Lichtspalts über die gesamte Leistenlänge der typischerweise dünnwandigen und daher in sich flexiblen Profilleiste konstant zu halten, kann ein zwischen Profilleiste und Fahrzeugaußenfläche angeordneter Distanzhalter vorgesehen sein, auf dem sich die Profilleiste zumindest mittelbar abstützt. Hierdurch kann die Lichtspaltbreite definiert festgelegt werden und es steht nicht zu befürchten, dass die Lichtspaltbreite über die Länge der Leiste infolge von Fertigungsungenauigkeiten oder sonstigem Materialverzug variiert. Ein derartiger Distanzhalter kann insbesondere von einem unmittelbar auf der Fahrzeugaußenhaut aufliegenden Schenkel des Dichtungsprofils, an dem die Profilleiste angeordnet ist, gebildet sein. Es kann aber auch ein von dem Dichtungsprofil getrennter Distanzhalter vorgesehen sein, auf dem sich insbesondere der das Leuchtmittel tragende Funktionsschenkel des Profilleistenquerschnitts unmittelbar oder mittelbar über das Leuchtmittel abstützt. Dieser Distanzhalter kann auch aus einem transparenten Material gefertigt sein, so dass insbesondere dann, wenn sich das Leuchtmittel selbst auf diesem Distanzhalter abstützt, das emittierte Licht durch den Distanzhalter hindurch zum Lichtspalt geleitet wird.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine an einem Dichtungsprofil befestigte Zierleiste nach einer ersten Ausführungsform,
- Fig. 2: eine an einem Dichtungsprofil befestigte Zierleiste nach einer zweiten Ausführungsform,
- Fig. 3: eine an einem Dichtungsprofil befestigte Zierleiste nach einer dritten Ausführungsform, und
- Fig. 4: eine an einem Dichtungsprofil befestigte Zierleiste nach einer vierten Ausführungsform.

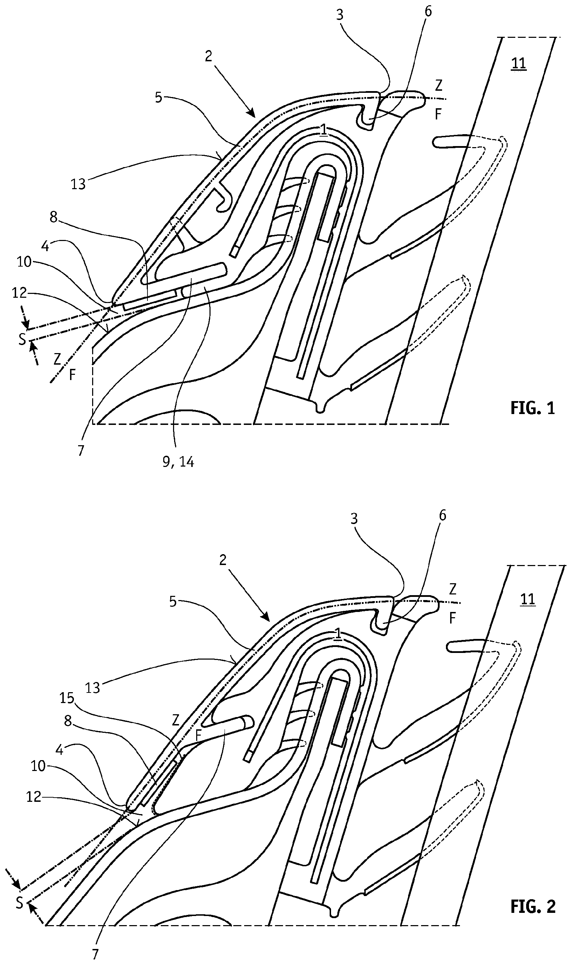

In Figur 1 ist eine auf einem Dichtungsprofil 1 befestigte Profilleiste 2 in Form einer Fensterschachtabdeckleiste dargestellt. Eine weitere Anwendung wäre zum Beispiel ein Bordkantenzierstab oder eine Blendenleiste zur Abdeckung etwa der A-, B- oder C-Leiste. Das Dichtungsprofil 1 wird mit seinem U-förmigen, durch einen eingelegten Metallbügel verstärkten Abschnitt auf ein Karosserieteil eines Kraftfahrzeugs aufgesteckt und dichtet den Türschacht zur Fensterscheibe 11 hin ab. Die Profilleiste 2 ist eingerichtet, dieses Dichtungsprofil 1 abzudecken und als Zierteil optisch möglichst hochwertig zu kaschieren. Hierzu weist die Profilleiste 2 bzw. der vom Material der Profilleiste 5 gebildete Profilleistenquerschnitt einen bogenförmigen Hauptschenkel 5 auf, dessen nach außen weisende Oberfläche die bei bestimmungsgemäßer Montage äußerlich sichtbare Zierfläche 13 der Profilleiste 2 bildet. Die Zierfläche 13 ist durch eine obere Sichtkante 3 und eine untere Sichtkante 4 begrenzt. Im Bereich dieser Sichtkanten 3, 4 knickt der Hauptschenkel 5 nach innen ab und bildet einen oberen Funktionsschenkel 6 und einen unteren Funktionsschenkel 7 aus, mittels derer die Profilleiste 2 in die Dichtleiste 1 eingreift, um an dieser gehalten zu werden. Die in den Figuren entlang des Hauptschenkels verlaufend strichpunktierte Linie soll die Grenze zwischen der Zierseite Z und der Funktionsseite F veranschaulichen.

Die Zierleiste weist neben der bevorzugt materialhomogenen Profilleiste 5 ein Leuchtmittel 8 auf. Das Leuchtmittel 6 ist durch eine OLED-Folie gebildet, die unmittelbar auf der der Fahrzeugaußenfläche 12 zugewandten Oberfläche des unteren Funktionsschenkels 7 aufgedruckt oder mit dieser auf sonstige Art, beispielsweise durch Verkleben, verbunden ist. Der untere Funtkionsschenkel 7 dient somit als Träger für das Leuchtmittel 8.

Die Profilleiste 5 ist bevorzugt aus einem nicht lichtdurchlässigen Material hergestellt bzw. besteht bevorzugt aus einem nicht lichtdurchlässigen Material, so dass auf der Funktionsseite F Liegende (in den Figuren die im Wesentlichen rechts vom Hauptschenkel 5 Liegenden) Baugruppenkomponenten, also insbesondere die Dichtleiste 6 und das Leuchtmittel 6 von außen nicht durch die Profilleiste hindurch erkennbar sind bzw. durch die Profilleiste 2 wirksam abgedeckt sind.

Es ist erkennbar, dass zwischen der zur Fahrzeugaußenfläche 13 gerichteten Oberfläche des unteren Funktionsschenkels 7 und der Fahrzeugaußenaußenfläche bzw. zwischen der unteren Sichtkante 4 und der Fahrzeugaußenfläche 13 ein Spalt mit einer Spaltbreite S verbleibt, der bei nicht aktivem bzw. eingeschaltetem Leuchtmittel 8 als Schattenfuge erkennbar ist. Nach Aktivierung bzw. Einschalten des Leuchtmittels 8 strahlt dieses die Fahrzeugaußenaußenfläche jedoch unmittelbar an und ein großer Teil des emittierten Lichts tritt durch den nun als Lichtspalt 10 wirkenden Spalt nach außen. Hierdurch wird eine edel anmutende, indirekte Beleuchtung geschaffen, die überwiegend nach unten hin abstrahlt, was das Blenden von Personen beim Ein- oder Aussteigen wirksam vermeidet.

In Figur 1 ist ferner erkennbar, dass der untere Funktionsschenkel 7 der Profilleiste 2 und damit auch das daran angeordnete Leuchtmittel 7 über einen unmittelbar an der Fahrzeugaußenfläche anliegenden Dichtleistenschenkel 9 zur Fahrzeugaußenfläche definiert auf Distanz gehalten wird. Der besagte Dichtleistenschenkel 9 bildet also einen Distanzhalter 14, der die gleichmäßige Beabstandung des das Leuchtmittel tragenden Funktionsschenkels von der Fahrzeugaußenfläche und damit eine über die Profilleistenlänge konstante Lichtspaltbreite gewährleistet. Die Lichtspaltbreite S Liegt bevorzugt im Bereich zwischen 1 mm und 4 mm, besonders bevorzugt zwischen 2 mm und 3 mm. Je nach Lichtausbeute der jeweils verwendeten Konstruktion und nach Lichtstärke des Leuchtmittels kommen aber auch Lichtspaltbreiten S in Betracht, die unterhalb 1 mm liegen.

Die in Figur 2 gezeigte Profilleiste 2 unterscheidet sich von der in Figur 1 gezeigten Profilleiste im Wesentlichen durch die andersartige Form des Profilleistenquerschnitts und die Anordnung des Leuchtmittels 8. Das Leuchtmittel 8 ist direkt auf der Rückseite des Hauptschenkels 5 angebracht, also auf der zum Fahrzeug hin gewandten rückseitigen Oberfläche des Hauptschenkels 5. Der mit dem Dichtungsprofil 1 zusammenwirkende untere Funktionsschenkel 7 setzt oberhalb des Leuchtmittels 8 auf der Rückseite des Hauptschenkels 5 an.

Bei der in Figur 2 gezeigten Ausführungsform der Profilleiste 2 fehlt ein Distanzhalter, der verhindern würde, dass der Abstand des Leuchtmittels 8 zum unmittelbar benachbarten Bauteil, hier dem Dichtungsprofil 1, konstant gehalten wird. Vielmehr würde hier der Abstand des Leuchtmittels von dem Dichtungsprofil bei nicht parallelem Verlauf der beiden Bauteile variieren, was sich in einer unterschiedlich intensiven Ausleuchtung des Lichtspalts 10 äußern kann, insbesondere wenn das Leuchtmittel 8 mit dem benachbarten DichtungsprofiL in Kontakt gerät und infolge dessen ein Großteil des emittierten Lichts den Lichtspalt nicht erreicht. Durch die steile, überwiegend vertikale Ausrichtung des Leuchtmittels 8 fällt allerdings ein geringeres Nach-Innen-Schwenken des Hauptschenkels 5 zur Dichtleiste hin mit Blick auf die Lichtspaltbreite S nicht so stark ins Gewicht wie dies bei der in Figur 1 gezeigten Ausführungsform der Fall wäre, bei der das Leuchtmittel eher horizontal ausgerichtet ist.

In Figur 2 ist ferner eine Reflexionsbeschichtung auf dem dem Leuchtmittel zugewandten Oberflächenbereich des Dichtungsprofils vorgesehen. Diese Reflexionsbeschichtung kann von einer aufgebrachten Reflexionsfolie oder einer zum Beispiel aufgedampften bzw. aufgesputterten Beschichtung gebildet sein. Die hierdurch geschaffene Reflexionsfläche 15 erhöht die Lichtausbeute, in dem das vom Leuchtmittel emittierte Licht, dass vornehmlich auf diese Reflexionsfläche trifft, effektiver zum Lichtspalt hin abgelenkt wird und die Lichtausbeute, also der Anteil des insgesamt abgegebenen Lichts, der tatsächlich aus dem Lichtspalt heraustritt, insgesamt erhöht wird. Die Reflexionsfläche 15 kann zum Leuchtmittel hin derart ausgerichtet sein, dass sie eine Umlenkungsfläche bildet, mit der die Lichtstrahlen wie von einem Spiegel gezielt in Richtung des Lichtspalts gelenkt werden.

Obwohl die Reflexionsbeschichtung nur in Figur 2 explizit gezeigt ist, ist der Verwendung bei anderen Ausführungsformen ebenfalls denkbar, sofern bei diesen ein Fläche insbesondere am DichtungsprofiL oder an der Fahrzeugaußenfläche zur Verfügung steht, die als eine Reflexionsfläche im vorstehend beschriebenen Sinne dienen können.

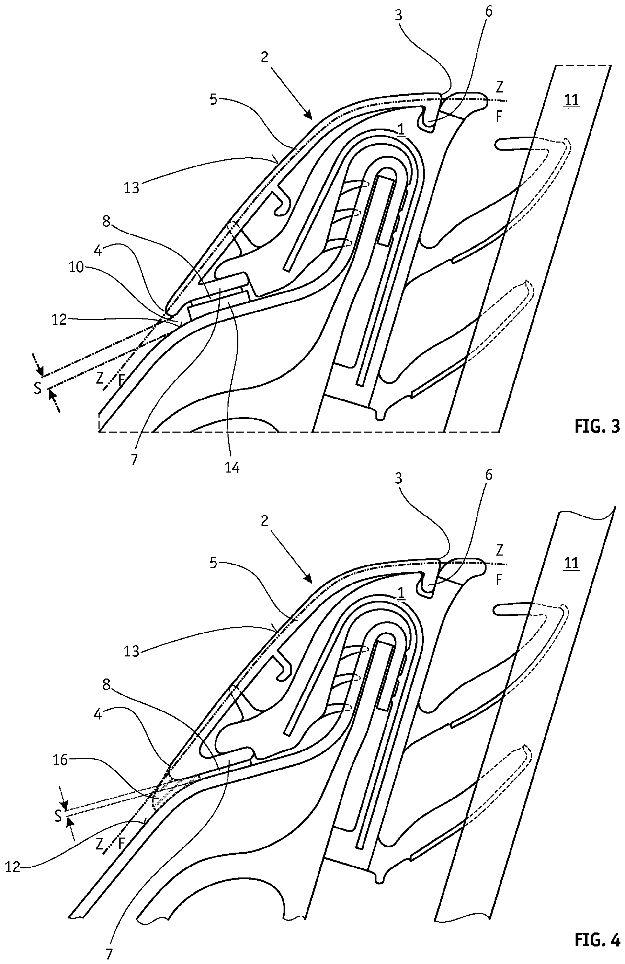

Figur 3 zeigt schließlich wieder eine an Figur 1 angenäherte Ausführungsform, bei der allerdings der Distanzhalter 14 nicht von dem Material des Dichtungsprofils 1 gebildet ist, sondern von einem von dem Dichtungsprofil 1 separaten Bauteil, das in Figur 3 beispielhaft auf der Fahrzeugaußenfläche 12 befestigt ist. Alternativ hierzu kann jedoch auch vorgesehen sein, dass der Distanzhalter auf dem Dichtungsprofil oder an dem Leuchtmittel befestigt ist.

Um eine ausreichende Ausleuchtung des Lichtspalts S zu gewährleisten, ist der Distanzhalter von einem lichtdurchlässigen Abstandsstreifen, insbesondere aus einem lichtdurchlässigen Kunststoff, gebildet, der das emittierte Licht in Richtung des Lichtspalts weiterleiten kann. Oberflächenbereiche des Distanzhalters können mit einer Reflexionsbeschichtung versehen sein. Dies betrifft natürlich insbesondere diejenigen Oberflächenbereiche, die dem Lichtspalt abgewandt sind. Hierdurch lässt sich verhindern oder zumindest reduzieren, dass Licht an einer dem Lichtspalt abgewandten Oberfläche aus dem Distanzhalter heraustritt und für die Ausleuchtung des Lichtspalts verloren geht. Insgesamt kann die Lichtausbeute (der Anteil des vom Leuchtmittel emittierten Lichts, der tatsächlich aus dem Lichtspalt heraustritt) verbessert werden oder es kann bei vergleichbarer Lichtausbeute ein Leuchtmittel geringerer Leistung verwendet werden.

Der in Figur 1 und Figur 3 gezeigte Distanzhalter hat außerdem die Funktion, das Eindringen von Schmutz und Feuchtigkeit in den auf der Funktionsseite F der Profilleiste befindlichen Raum zu verhindern.

Figur 4 zeigt schließlich eine an Figur 1 und Figur 3 angelehnte Ausführungsform, bei der das Leuchtmittel 8 direkt im Kontakt mit der Fahrzeugaußenfläche 12 steht und das vom Leuchtmittel emittierte Licht zur Beleuchtung des Lichtspalts aus der dem Lichtspalt zugewandten Schmalseite des Leuchtmittels heraustritt.

Als optionale zusätzlich Ergänzung, die auch für andere Ausführungsformen wie den in den vorhergien Figuren gezeigten Ausführungsformen Anwendung finden kann, ist an der unteren Sichtkante der Profilleiste optional ein lichtdurchlässiger Verschlussstreifen 16 vorgesehen. Dieser ist zwischen der Profilleiste und der Fahrzeugaußenfläche platziert und verschließt den Lichtspalt gegen eindringenden Schmutz und Feuchtigkeit. Vorteilhafter Weise und wie in Figur 4 dargestellt schließt die nach außen gerichtete Fläche des Verschlussstreifens 16 bündig mit der äußeren Oberfläche der Profilleiste ab. In einer besonderen Ausführungsform kann der lichtdurchlässige Verschlussstreifen 16 auch als Teil der Profilleiste ausgeführt oder an dieser angespritzt oder auf sonstige Weise mit der Profilleiste verbunden sein.

Das Leuchtmittel 8 muss nicht notwendiger Weise ein sich über die gesamte Zierleiste durchgehend erstreckender Leuchtmittelfolienstreifen sein. Je nach Anwendungsfall kann sich das Leuchtmittel auch nur über eine Teillänge der Zierleiste erstrecken oder es können mehrere, bevorzugt mehrere unmittelbar aneinander angrenzende Leuchtmittel vorgesehen sein, die selektiv ansteuerbare Bereiche bilden, beispielsweise um nur bestimmte, ausgewählte Informationen darzustellen oder um gezielt voneinander abgrenzbare Bereich separat zu beleuchten.

Ein weiterer Vorteil der beschriebenen Erfindung im Allgemeinen sowie der in den Figuren gezeigten Ausführungsformen besteht darin, dass die hinterleuchteten ProfilLeisten ebenso wie kompatible, nicht hinterleuchtete Profilleisten wahlweise auf ein und dasselbe Trägerprofil bzw. Dichtungsprofil aufgesetzt werden können. Dichtfunktion und Optik bzw. Leuchtfunktion der Baugruppe sind vollständig voneinander getrennt, so dass allein die Profilleiste die optische Funktion übernimmt. Das Dichtungsprofil muss nicht speziell für den Einsatz einer hinterleuchteten Zierleiste vorbereitetet oder gezielt hierfür ausgewählt werden.

Für den Fahrzeughersteller besteht die Möglichkeit, das Fahrzeug allein durch die Auswahl der auf das für alle Fahrzeugausstattungen gleiche Dichtungsprofil 1 aufzusetzenden Profilleiste 2 optisch deutlich aufzuwerten, beispielsweise im Rahmen eines als Sonderzubehör angebotenen Lichtpakets. Auch können so Fahrzeuge, die ursprünglich eine nicht hinterleuchtete Zierleiste aufwiesen, problemlos und handwerklich besonders einfach nachgerüstet werden, ohne dass das Austauschen des Dichtungsprofils notwendig wäre.

### Bezugszeichenliste

- 1: Dichtungsprofil
- 2: Profilleiste
- 3: obere Sichtkante
- 4: untere Sichtkante
- 5: HauptschenkeL
- 6: oberer Funktionsschenkel
- 7: unterer Funktionsschenkel
- 8: Leuchtmittel
- 9: Dichtleistenschenkel
- 10: Lichtspalt
- 11: Fensterscheibe
- 12: Fahrzeugaußenfläche
- 13: Zierfläche
- 14: Distanzhalter
- 15: Reflexionsfläche
- 16: Verschlussstreifen

- S: Lichtspaltbreite
- Z: Zierseite
- F: Funktionsseite

## Patentansprüche

1. Beleuchtete Zierleisten-Dichtungsprofil-Kombination für ein Kraftfahrzeug mit einer Zierleiste und einem Dichtungsprofil (1), wobei
• die Zierleiste eine Profilleiste (2) aufweist, die eine zum Fahrzeug hin gerichtete Funktionsseite (F) und eine vom Fahrzeug weg gerichtete Zierseite (Z) definiert, wobei die Zierseite (Z) eine äußerlich sichtbare Zierfläche (13) aufweist, die durch eine untere Sichtkante (4) begrenzt ist, und
• die Profilleiste (2) bei bestimmungsgemäßer Endmontage am Kraftfahrzeug von dem am Kraftfahrzeug anzuordnenden Dichtungsprofil (1) getragen ist, und
• wenigstens ein auf Seiten der Funktionsseite (F) angeordnetes Leuchtmittel (8) vorgesehen ist,
**dadurch gekennzeichnet, dass** die Profilleiste (2) aus einem nicht lichtdurchlässigen Material hergestellt ist und bei bestimmungsgemäßer Endmontage am Fahrzeug unter der unteren Sichtkante (4) ein Lichtspalt gebildet ist, aus dem das von dem Leuchtmittel (8) emittierte Licht nach außen sichtbar hervorzutreten vermag.

2. Zierleisten-Dichtungsprofil-Kombination nach Anspruch 1, **dadurch gekennzeichnet, dass** das Leuchtmittel (8) auf der Funktionsseite (F) der Profilleiste (2) an der Oberfläche der Profilleiste (2) angeordnet ist.

3. Zierleisten-Dichtungsprofil-Kombination nach einem der vorhergehenden Ansprüche, **dadurch gekennzeichnet, dass** die Profilleiste (2) einen Profilleistenquerschnitt mit einem Hauptschenkel (5), dessen nach außen gerichtete Oberfläche die äußerlich sichtbare Zierfläche (13) bildet, und wenigstens einen auf der Funktionsseite (F) angeordneten Funktionsschenkel (7) aufweist, und dass das Leuchtmittel (8) an dem Funktionsschenkel (7) oder auf der Funktionsseite (F) rückseitig am Hauptschenkel angeordnet ist.

4. Zierleisten-Dichtungsprofil-Kombination nach dem vorhergehenden Anspruch, **dadurch gekennzeichnet, dass** das Leuchtmittel (8) rückseitig am Hauptschenkel angeordnet ist, der Funktionsschenkel (7) mit dem Dichtungsprofil (1) zusammenwirkt und oberhalb des Leuchtmittels (8) auf der Rückseite des Hauptschenkels (5) ansetzt.

5. Zierleisten-Dichtungsprofil-Kombination nach einem der vorhergehenden Ansprüche, **dadurch gekennzeichnet, dass** ein Distanzhalter (14) vorgesehen ist, über den sich die die Profilleiste (2) nach bestimmungsgemäßer Endmontage am Fahrzeug zumindest mittelbar an der Fahrzeugaußenfläche (12) abzustützen vermag.

6. Zierleisten-Dichtungsprofil-Kombination nach dem vorhergehenden Anspruch, **dadurch gekennzeichnet, dass** der Distanzhalter (14) aus einem transparenten Material besteht, der von dem Leuchtmittel (8) durchleuchtet werden kann.

7. Zierleisten-Dichtungsprofil-Kombination nach einem der vorhergehenden Ansprüche 1, 5 oder 6, **dadurch gekennzeichnet, dass** das Dichtungsprofil (1), an der die Profilleiste (2) befestigt ist, das Leuchtmittel (8) trägt.

8. Zierleisten-Dichtungsprofil-Kombination nach einem der vorhergehenden Ansprüche, **dadurch gekennzeichnet, dass** ein Schenkel des Dichtungsprofils (1), an dem die Profilleiste (2) befestigt ist, einen Distanzhalter (14) bildet, der bei bestimmungsgemäßer Anordnung der Zierleiste am Kraftfahrzeug zwischen Fahrzeugaußenfläche (12) und der Profilleiste vorgesehen ist und über den sich die Profilleiste (2) nach bestimmungsgemäßer Endmontage am Fahrzeug zumindest mittelbar an der Fahrzeugaußenfläche (12) abzustützen vermag.

9. Zierleisten-Dichtungsprofil-Kombination nach einem der vorhergehenden Ansprüche, **dadurch gekennzeichnet, dass** die Profilleiste (2) aus Metall hergestellt ist.

10. Zierleisten-Dichtungsprofil-Kombination nach einem der vorhergehenden Ansprüche, **dadurch gekennzeichnet, dass** das Leuchtmittel sich außerhalb des von der Profilleiste bestimmten Profilleistenquerschnitts befindet und nicht in den Profilleistenquerschnitt eingebettet ist.

11. Kraftfahrzeug mit einer Zierleisten-Dichtungsprofil-Kombination nach einem der vorhergehenden Ansprüche, **dadurch gekennzeichnet, dass** die Zierleisten-Dichtprofil-Kombination derart ausgebildet ist, dass sich der Lichtspalt bei bestimmungsgemäßer Anordnung der Zierleiste am Kraftfahrzeug zwischen der Fahrzeugaußenfläche (12) und der unteren Sichtkante (4) gebildet ist.

12. Kraftfahrzeug mit einer Zierleisten-Dichtungsprofil-Kombination nach dem vorhergehenden Anspruch, **dadurch gekennzeichnet, dass** die Fahrzeugaußenfläche (12) von dem lackierten Karosserieblech oder von der Oberfläche eines zwischen Zierleiste und Karosserieblech hineinragenden anderen Teils gebildet ist.

13. Kraftfahrzeug mit einer Zierleisten-Dichtungsprofil-Kombination nach einem der beiden vorhergehenden Ansprüche, **dadurch gekennzeichnet, dass** bei bestimmungsgemäßer Endmontage am Fahrzeug die Fahrzeugaußenfläche (12) von dem Dichtungsprofil (1) gebildet ist.

14. Zierleisten-Dichtprofil-Kombination nach einem der Ansprüche 1 bis 10 **dadurch gekennzeichnet, dass** die Zierleiste eine Fensterschachtabdeckleiste ist, ein Bordkantenzierstab oder eine Blendenleiste zur Abdeckung der A-, B- oder C-Leiste.

15. Kraftfahrzeug mit einer Zierleisten-Dichtprofil-Kombination nach einem der Ansprüche 1 bis 10 oder 14

## Claims

1. Illuminated decorative trim sealing profile combination for a motor vehicle with a decorative trim and a sealing profile (1), wherein
• the decorative trim has a profile trim (2) that defines a functional side (F) facing the vehicle and a decorative side (Z) facing away from the vehicle, wherein the decorative side (Z) has an externally visible decorative surface (13), which is delimited by a lower visible edge (4), and
• the profile trim (2) is supported by a sealing profile (1) to be arranged on the motor vehicle in a final installation on the motor vehicle as intended, and
• at least one lighting means (8) arranged on the functional side (F) is provided,
**characterised in that** the profile trim (2) is made from a non-light-permeable material and a light gap is formed under the lower visual edge (4) in a final installation on the vehicle as intended, from which the light emitted by the lighting means (8) can exit in a way that is visible from the outside.

2. Decorative trim sealing profile combination
according to claim 1, **characterised in that** the lighting means (8) is arranged on the functional side (F) of the profile trim (2) on the surface of the profile trim (2).

3. Decorative trim sealing profile combination
according to one of the preceding claims, **characterised in that** the profile trim (2) has a profile trim cross-section with a main leg (5), the outward facing surface of which forms the decorative surface (13) visible from the outside, and at least one functional leg (7) arranged on the functional side (F), and **in that** the lighting means (8) is arranged on the functional leg (7) or on the rear of the main leg on the functional side (F).

4. Decorative trim sealing profile combination
according to the preceding claim, **characterised in that** the lighting means (8) is arranged on the rear of the main leg, the functional leg (7) cooperates with the sealing profile (1) and starts above the lighting means (8) at the rear of the main leg (5).

5. Decorative trim sealing profile combination
according to one of the preceding claims, **characterised in that** a distancer (14) is provided, with which the profile trim (2) can support itself at least directly on the outer vehicle surface (12) in a final installation on the motor vehicle as intended.

6. Decorative trim sealing profile combination
according to the preceding claim, **characterised in that** the distancer (14) consists of a transparent material, through which the lighting means (8) can illuminate.

7. Decorative trim sealing profile combination
according to one of the preceding claims 1, 5 or 6, **characterised in that** the sealing profile (1) to which the profile trim (2) is fitted supports the lighting means (8).

8. Decorative trim sealing profile combination
according to one of the preceding claims, **characterised in that** a leg of the sealing profile (1) to which the profile trim (2) is fitted forms a distancer (14), which is provided between the outer vehicle surface (12) and the profile trim with an arrangement of the decorative trim on the motor vehicle as intended, and with which the profile trim (2) can support itself at least directly on the outer vehicle surface (12) in a final installation on the motor vehicle as intended.

9. Decorative trim sealing profile combination according to one of the preceding claims,
**characterised in that** profile trim (2) is made of metal.

10. Decorative trim sealing profile combination according to one of the preceding claims,
**characterised in that** the lighting means is located outside of the profile trim cross-section determined by the profile trim and is not embedded in the profile trim cross-section.

11. Motor vehicle with a decorative trim sealing profile combination according to one of the preceding claims,
**characterised in that** the decorative trim sealing profile combination is designed in such a way that the light gap is formed between the outer vehicle surface (12) and the lower visual edge (4) when the decorative trim is arranged on the vehicle as intended.

12. Motor vehicle with a decorative trim sealing profile combination according to the preceding claim,
**characterised in that** the outer vehicle surface (12) is formed by the painted chassis panel or by another part protruding between the decorative trim and the chassis panel from the surface.

13. Motor vehicle with a decorative trim sealing profile combination according to one of the preceding claims, **characterised in that** the outer vehicle surface (12) is formed by the sealing profile (1) in its final installation on the vehicle as intended.

14. Decorative trim sealing profile combination according to one of the claims 1 to 10, **characterised in that** the decorative trim is a window column cover trim, a decorative kerb strip or a cover trim for covering the A, B of C column.

15. Motor vehicle with a decorative trim sealing profile combination according to one of the claims 1 to 10 or 14.

## Revendications

1. Combinaison éclairée de baguette décorative et de joint d'étanchéité profilé pour un véhicule automobile avec une baguette décorative et un joint d'étanchéité profilé (1), où
• la baguette décorative présente une baguette profilée (2) définissant un côté fonctionnel (F) dirigé vers le véhicule et un côté décoratif (Z) dirigé dans le sens opposé au véhicule, le côté décoratif (Z) présentant une surface décorative (13) visible de l'extérieur limitée par un bord visible inférieur (4) et
• la baguette profilée (2) est portée par le joint d'étanchéité profilé (1) à disposer sur un véhicule automobile en cas de montage final conforme sur le véhicule automobile et
• au moins un moyen d'éclairage (8) disposé au niveau du côté fonctionnel (F) est prévu,
**caractérisée en ce que** la baguette profilée (2) est fabriquée à partir d'un matériau non perméable à la lumière et que, en cas de montage final conforme sur le véhicule, un interstice lumineux est formé sous le bord visible inférieur (4), d'où la lumière émise par le moyen d'éclairage (8) arrive à ressortir à l'extérieur de manière visible.

2. Combinaison de baguette décorative et de joint d'étanchéité profilé selon la revendication 1, **caractérisée en ce que** le moyen d'éclairage (8) est disposé sur la surface de la baguette profilée (2) du côté fonctionnel (F) de la baguette profilée(2).

3. Combinaison de baguette décorative et de joint d'étanchéité profilé selon l'une des revendications précédentes, **caractérisée en ce que** la baguette profilée (2) présente une coupe transversale de la baguette profilée avec une branche principale (5), dont la surface orientée vers l'extérieur forme la surface décorative (13) visible de l'extérieur, et au moins une branche fonctionnelle (7) disposée sur le côté extérieur (F) et que le moyen d'éclairage (8) est disposé à l'arrière de la branche fonctionnelle (7) ou du côté fonctionnel (F).

4. Combinaison de baguette décorative et de joint d'étanchéité profilé selon la revendication précédente, **caractérisée en ce que** le moyen d'éclairage (8) est disposé à l'arrière de la branche principale, la branche fonctionnelle (7) interagit avec le joint d'étanchéité profilé (1) étant fixée à l'arrière de la branche principale (5) au-dessus du moyen d'éclairage (8).

5. Combinaison de baguette décorative et de joint d'étanchéité profilé selon l'une des revendications précédentes, **caractérisée en ce qu'**un écarteur (14) est prévu qui peut soutenir au moins indirectement la baguette profilée (2) sur la face extérieure du véhicule (12) après le montage conforme sur le véhicule.

6. Combinaison de baguette décorative et de joint d'étanchéité profilé selon la revendication précédente, **caractérisée en ce que** l'écarteur (14) est constitué d'un matériau transparent à travers lequel peut passer le moyen d'éclairage (8).

7. Combinaison de baguette décorative et de joint d'étanchéité profilé selon l'une des revendications précédentes 1, 5 ou 6, **caractérisée en ce que** le joint d'étanchéité profilé (1) est fixé sur la baguette profilée (2) portant le moyen d'éclairage (8).

8. Combinaison de baguette décorative et de joint d'étanchéité profilé selon l'une des revendications précédentes, **caractérisée en ce qu'**une branche du joint d'étanchéité profilé (1) sur laquelle est fixée la baguette profilée (2) forme un écarteur (14) prévu en cas de disposition conforme de la baguette décorative sur le véhicule entre la face extérieure du véhicule (12) et la baguette profilée et qui peut soutenir au moins indirectement la baguette profilée (2) sur la face extérieure du véhicule (12) après le montage final conforme sur le véhicule.

9. Combinaison de baguette décorative et de joint d'étanchéité profilé selon l'une des revendications précédentes,
**caractérisée en ce que** la baguette profilée (2) est fabriquée en métal.

10. Combinaison de baguette décorative et de joint d'étanchéité profilé selon l'une des revendications précédentes,
**caractérisée en ce que** le moyen d'éclairage se trouve en dehors de la coupe transversale de la baguette profilée déterminée par la baguette profilée et n'est pas intégré dans la coupe transversale de la baguette profilée.

11. Véhicule automobile avec une combinaison de baguette décorative et de joint d'étanchéité profilé selon l'une des revendications précédentes,
**caractérisé en ce que** la combinaison de baguette décorative et de joint d'étanchéité profilé est configurée de telle sorte que l'interstice lumineux soit formé entre la face extérieure du véhicule (12) et le bord visible inférieur (4) en cas de disposition conforme de la baguette décorative sur le véhicule.

12. Véhicule automobile avec une combinaison de baguette décorative et de joint d'étanchéité profilé selon la revendication précédente,
**caractérisé en ce que** la face extérieure du véhicule (12) est formée par la tôle de carrosserie peinte ou par la surface d'une autre pièce rentrant entre la baguette décorative et la tôle de carrosserie.

13. Véhicule automobile avec une combinaison de baguette décorative et de joint d'étanchéité profilé selon l'une des deux revendications précédentes, **caractérisé en ce que** la face extérieure du véhicule (12) est formée par le joint d'étanchéité profilé (1) en cas de montage final conforme sur le véhicule.

14. Combinaison de baguette décorative et de joint d'étanchéité profilé selon l'une des revendications 1 à 10 **caractérisée en ce que** la baguette décorative est une baguette de couverture du puits de vitre, une baguette de ligne de ceinture ou une baguette d'obturation destinée à recouvrir la baguette A, B ou C.

15. Véhicule automobile avec une combinaison de baguette décorative et de joint d'étanchéité profilé selon l'une des revendications 1 à 10 ou 14.
